# EUROPÄISCHE PATENTSCHRIFT

(11) **EP 4 065 932 B1**
(45) Veröffentlichungstag und Bekanntmachung des Hinweises auf die Patenterteilung: **19.06.2024**
(21) Anmeldenummer: 20767546.3
(22) Anmeldetag: 03.09.2020
(51) Int. Cl.: G01C 21/00

(54) **VERFAHREN ZUM BEREITSTELLEN VON KARTENDATEN FÜR MINDESTENS ZWEI TYPEN AN ZONEN**
METHOD OF PROVIDING MAP DATA FOR AT LEAST TWO TYPES OF ZONES
PROCEDE POUR FOURNIR DONNEES DE CARTE POUR AU MOINS DEUX TYPES DE ZONES

(30) Priorität: 28.11.2019 DE 102019132374
(43) Veröffentlichungstag der Anmeldung: 05.10.2022
(73) Patentinhaber: Bayerische Motoren Werke Aktiengesellschaft, 80809 München (DE)
(72) Erfinder: SONNTAG, Achim, 82140 Olching (DE); HOFMEIER, Harald, 85386 Eching (DE); DIRNECKER, Johannes, 80807 München (DE); DITZELL, Irmengard, 85354 Freising (DE); EWERS, Marcel, 85221 Dachau (DE)
(86) Internationale Anmeldenummer: PCT/EP2020/074646
(87) Internationale Veröffentlichungsnummer: WO 2021/104694

(56) Entgegenhaltungen:
- EP-A1- 2 378 249
- WO-A1-2008/148606

## Beschreibung

Die Erfindung betrifft ein Verfahren zum Bereitstellen von Kartendaten für mindestens zwei Typen an Zonen, sowie ein Fahrzeug, das mit diesem Verfahren hergestellte Kartendaten umfasst.

Heutzutage sind Navigationssyteme für Fahrzeuge wohlbekannt. Ebenfalls bekannt sind Einstellungen, mit denen die Route entsprechend den Wünschen des Fahrers eingestellt werden kann, beispielsweise die Vermeidung von maut- oder vignettenpflichtigen Straßen. Ebenfalls bekannt ist die Vermeidung von ganzen Gebieten, Meidegebiete genannt, die bisher hauptsächlich aus Sicherheitsgründen beachtet wurden. Es wird damit gerechnet, dass zukünftig auch Zonen definiert werden, in denen nur reduzierte Fahrzeugemissionen von Verbrennungsmaschinen, Low Emission Zones (LEZ) und gar keine Fahrzeugemissionen von Verbrennungsmaschinen, Zero Emission Zones (ZEZ), erlaubt sind.

Die Zonen können in als weiteres sogenanntes Layer zu einer Karte bereitgestellt sein, wobei die Karte die Straßenabschnitte, auch Links genannt, umfasst. Die Beschreibung der Zonen kann auf zwei verschiedene Arten vorgenommen sein: Als Bereich, der über GPS Koordinaten definiert sein kann, oder als Auflistung von Straßenabschnitten, die über die Identifikation von sogenannten Link IDs definiert sein kann. Der Bereich kann durch Position und Ausdehnung bzw. Form, oder auch als Auflistung der Position von kleineren Bereichen immer gleicher Form definiert sein. Der Bereich umfasst typischerweise mehrere Straßenabschnitte. Bei der Auflistung von Straßenabschnitte wird eine Zone darüber definiert, welche Straßenabschnitte in der Auflistung stehen.

Jede Art der Bereitstellung hat Vor- und Nachteile: Die bereichsbasierte Darstellung hat oft eine geringe Präzision. Dafür kann die Darstellung mithilfe geringerer Datenmengen erreicht werden bei gleichzeitig geringem Pflegeaufwand. Die straßenabschnittsbasierte Darstellung ermöglicht eine hohe Präzision, benötigt aber große Datenmengen und einen höheren Pflegeaufwand. Dokument WO 2008/148606 A1 offenbart den Betrieb eines Navigationssystems und den Betrieb eines Navigationssystems für ein Kraftfahrzeug.

Die Aufgabe an den Fachmann ist eine verbesserte bereichsbasierte Darstellung bereit zu stellen. Insbesondere ist es die Aufgabe s durch Abgleich der bereichsbasierten Datenbank (enthält Informationen unter welchen Umständen eine Einfahrt in die Zone erlaubt ist) mit der Standardkarte (enthält nur die Information eines Durchfahrverbots oder eingeschränkt befahrbaren Straße) eine präzise und aktuelle Information für PHEVs und BEVs zu ermitteln.

Die Aufgabe wird durch den unabhängigen Anspruch gelöst. Vorteilhafte Ausführungsbeispiele sind im abhängigen Anspruch definiert.

Die Erfindung betrifft ein Verfahren zum Bereitstellen von Kartendaten für mindestens zwei Typen an Zonen, LEZ und ZEZ, umfassend: Bereitstellen von ersten Kartendaten für die zwei Typen an Zonen, LEZ und ZEZ, wobei die Zonen durch Bereiche beschrieben sind; Bereitstellen von zweiten Kartendaten für einen der Typen an Zonen, ZEZ, wobei der eine Typ durch die Auflistung von Straßenabschnitten beschrieben ist; Bereitstellen einer Karte, die alle Straßenabschnitte und deren Position enthält; Überprüfen, mittels der Karte, ob die in den ersten Kartendaten genannten Bereiche für ZEZ mit den in den zweiten Kartendaten genannten Straßenabschnitte für ZEZ übereinstimmen, wobei die Bereichsinformation auch Gültigkeitszeiträume enthalten kann, wie Uhrzeit oder Datum; Im Falle des Nicht-Übereinstimmens: Ändern der ZEZ Zonen in den ersten Kartendaten; Bereitstellen der ersten, gegebenenfalls korrigierten Kartendaten und angereicherte, insbesondere mit vorhandene Gültigkeitsinformationen, Kartendaten.

Hierin wird also vorgeschlagen, die Datenqualität von Teilen der bereichsbasierten Darstellung (ZEZ Zones der ersten Kartendaten) mithilfe der auf Straßenabschnitten basierenden Darstellung zu verbessern. Der dafür notwendige Aufwand kann fokussiert für kritische Zonen, deren exakte Lage und Ausdehnung und deren Aktualität besonders wichtig ist, aufwendet werden.

Beispielsweise kann es sein, dass in ZEZ Zonen, Fahrzeuge nur elektrisch fahren dürfen.

Hybridfahrzeuge, deren rein elektrische Reichweite besonders begrenzt ist, dürfen diese ZEZ nur rein elektrisch durchfahren und zur Abschätzung der Möglichkeit dieses rein elektrischen Durchfahrens ist die Genauigkeit der Ausdehnung der ZEZ Zone entscheidend. LEZ Zonen hingegen können geringere Anforderungen an die Emission haben und lediglich auf den Typ des Fahrzeugs abstellen. Für LEZ Zonen reicht somit eine ungenauere Angabe der Ausdehnung bei der Nutzung von Navigationssystemen in Hybridfahrzeugen.

In einer einfach und dynamisch verwaltbaren Datenbank liegen Informationen zu Emissionszonen aller Art (Bereichsbasierte Speicherung), LEZ, ZEZ. ZEZs können in einer Standardkarte für Fahrzeugnavigation bereits als "nicht befahrbar" gekennzeichnet sein (Straßen- bzw. linkbasiert).

Es ist ein Vorteil, dass Umweltzonen in einer separten Datenbank mit geringem Aufwand verwaltet werden können. Bei besonderer Kritikalität erreichen die Daten aber eine hohe Zuverlässigkeit und Präzision. Ferner ist ein Vorteil, dass das Verfahren zur Qualitätserhöhung von Zoneninformation beiträgt, durch die Verknüpfung zweier Typen von Kartendaten.

Als Übereinstimmung kann hierin verstanden werden: a) dass kein Straßenabschnitt in der Karte verzeichnet ist, der vollständig innerhalb der ZEZ Zone gemäß den ersten Kartendaten liegt, und der aber nicht in der Auflistung der ZEZ Zone gemäß den zweiten Kartendaten enthalten ist; und b) dass kein Straßenabschnitt in der Karte verzeichnet ist, der zwar in der Auflistung der ZEZ Zone gemäß den ersten Kartendaten enthalten ist, aber vollständig außerhalb der ZEZ Zone gemäß den ersten Kartendaten liegt.

Ebenfalls in Bereich der Erfindung liegt ein Fahrzeug, umfassend Speichermittel und/oder die Kommunikationsfähigkeit zu einem Backend, umfassend eine Karte und Kartendaten, die gemäß einem vorstehenden Verfahren bereitgestellt wurden, wobei die Karten auch im Backend liegen können.

### KURZE BESCHREIBUNG DER ZEICHNUNG

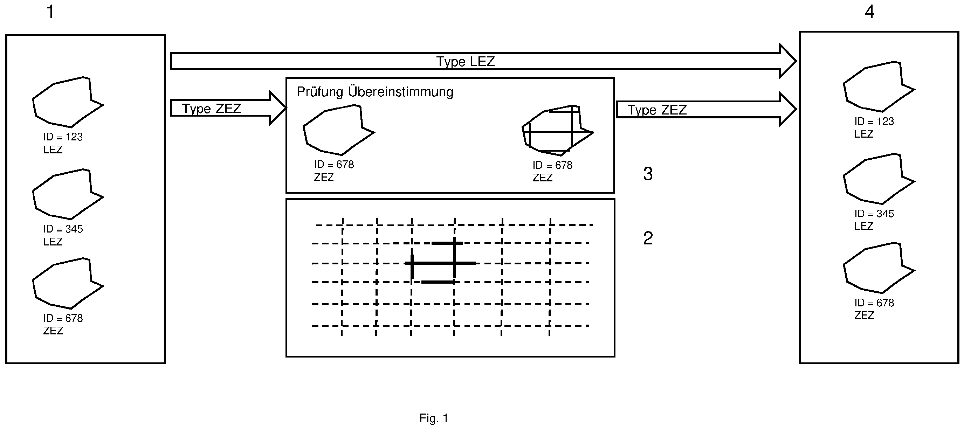

Fig. 1 zeigt skizzenhaft ein Verfahren gemäß eines Ausführungsbeispiels.

### DETAILLIERTE BESCHREIBUNG DES AUSFÜHRUNGSBEISPIELS

Fig. 1 zeigt skizzenhaft ein Verfahren gemäß eines Ausführungsbeispiels. Die ersten Kartendaten 1 werden bereitgestellt und umfassen verschiedene Zonen der Typen LEZ und ZEZ in Bereichsdarstellung: ID 123 vom Typ LEZ, ID 345 vom Typ LEZ und ID 678 vom Typ ZEZ. Gleichzeitig werden die Kartendaten 2 bereitgestellt und umfassen eine Darstellung der ZEZ in Straßenabschnitten. Im Schritt 3 wird die Prüfung der Übereinstimmung für die ZEZ Zone ID 678 gemäß der Kartendatenbank 1 und der Kartendatenbank 2 vorgenommen. Im Fall einer nötigen Korrektur wird die Kartendaten 1 korrigiert zu den Kartendaten 4. Diese Kartendaten 4 werden an das Fahrzeug übertragen und dort zur Routenfindung, als Eingabe zur Anpassung der Fahrstrategie oder als Hinweis an den Fahrer verwendet werden, oder als zeitlich gesteuerter Hinweis an den Fahrer verwendet werden, z.B. nur an Wochenende oder nach 18:00Uhr.

## Patentansprüche

1. Verfahren zum Bereitstellen von Kartendaten für mindestens zwei Typen an Zonen umfassend:
Bereitstellen von ersten Kartendaten für die zwei Typen an Zonen, wobei die Zonen durch Bereiche beschrieben sind;
Bereitstellen von zweiten Kartendaten für einen der Typen an Zonen, wobei der eine Typ durch die Auflistung von Straßenabschnitten beschrieben ist;
Bereitstellen einer Karte, die alle Straßenabschnitte und deren Position enthält;
**Gekennzeichnet durch**:
Überprüfen, mittels der Karte, ob die in den ersten Kartendaten genannten Bereiche für Zonen des einen Typs mit den in den zweiten Kartendaten genannten Straßenabschnitten für Zonen des einen Typs übereinstimmen;
Im Falle des Nicht-Übereinstimmens: Ändern der Zonen des einen Typs in den ersten Kartendaten;
Bereitstellen der ersten, gegebenenfalls korrigierten Kartendaten.

2. Verfahren nach Anspruch 1, wobei Übereinstimmung bedeutet,
a) dass kein Straßenabschnitt in der Karte verzeichnet ist, der vollständig innerhalb der Zone des einen Typs gemäß den ersten Kartendaten liegt, und der aber nicht in der Auflistung der Zone des einen Typs gemäß den zweiten Kartendaten enthalten ist; und
b) dass kein Straßenabschnitt in der Karte verzeichnet ist, der zwar in der Auflistung der Zone des einen Typs gemäß den zweiten Kartendaten enthalten ist, aber vollständig außerhalb der Zone des einen Typs gemäß den ersten Kartendaten liegt.

## Claims

1. Method for providing map data for at least two types of zones, comprising:
providing first map data for the two types of zones, wherein the zones are described by regions;
providing second map data for one of the types of zones, wherein the one type is described by the listing of road sections;
providing a map that contains all road sections and their position;
**characterized by**:
checking, by way of the map, whether the regions specified in the first map data for zones of the one type match the road sections specified in the second map data for zones of the one type;
in the event of absence of a match: changing the zones of the one type in the first map data;
providing the first, possibly corrected map data.

2. Method according to Claim 1, wherein matching means
a) that the map has no recorded road section that is located completely within the zone of the one type according to the first map data but is not contained in the listing of the zone of the one type according to the second map data; and
b) that the map has no recorded road section that, although it is contained in the listing of the zone of the one type according to the second map data, is located completely outside the zone of the one type according to the first map data.

## Revendications

1. Procédé de fourniture de données cartographiques pour au moins deux types de zones, comprenant :
fourniture de premières données cartographiques pour les deux types de zones, les zones étant décrites par des régions ;
fourniture de deuxièmes données cartographiques pour l'un des types de zones, ledit type étant décrit par la liste de tronçons de route ;
fourniture d'une carte qui contient tous les tronçons de route et leur position ;
**caractérisé par** :
vérification, au moyen de la carte, si les régions mentionnées dans les premières données cartographiques pour les zones dudit type concordent avec les tronçons de route mentionnés dans les deuxièmes données cartographiques pour les zones dudit type ;
en cas de non-concordance : modification des zones dudit type dans les premières données cartographiques ;
fourniture des premières données cartographiques, éventuellement corrigées.

2. Procédé selon la revendication 1, la concordance signifiant
a) qu'aucun tronçon de route n'est enregistré sur la carte qui se trouve entièrement à l'intérieur de la zone dudit type selon les premières données cartographiques, mais qui n'est pas inclus dans la liste de la zone dudit type selon les deuxièmes données cartographiques ; et
b) qu'aucun tronçon de route n'est enregistré sur la carte qui, bien qu'il soit inclus dans la liste de la zone dudit type selon les deuxièmes données cartographiques, se trouve entièrement en dehors de la zone dudit type selon les premières données cartographiques.
